# EUROPEAN PATENT APPLICATION

(11) **EP 2 211 186 A1**
(43) Date of publication of application: **28.07.2010**
(21) Application number: 10150570.9
(22) Date of filing: 12.01.2010
(51) Int. Cl.: G01P 15/13, G01P 15/08, G01P 15/125

(54) **System and method for increased flux density d'Arsonval mems accelerometer**

(30) Priority: 22.01.2009 US 357914
(71) Applicant: Honeywell International Inc., Morristown, NJ 07962 (US)
(72) Inventor: Dwyer, Paul W., Morristown, NJ 07962-2245 (US)
(74) Representative: Buckley, Guy Julian

(57) **Abstract**

An increased flux density D'Arsonval Micro-Electro-Mechanical Systems (MEMS) device increases flux density. The increased flux density D'Arsonval Micro-Electro-Mechanical Systems (MEMS) device includes a housing (206), a proof mass (202) suspended within the housing (206) by at least one torsional flexure (204), a second torsional rebalancing magnet (208b), and a current coil (214) disposed on the proof mass (202). A portion of the current coil (214) is disposed between the first torsional rebalancing magnet (208a) and the second torsional rebalancing magnet (208b). A field generated in response to a current in the current coil (214) interacts with a magnetic field generated by the first torsional rebalancing magnet (208a) and the second torsional rebalancing magnet (208b). The magnetic field generates a rebalancing force that stabilizes a position of the proof mass (202).

## Description

### BACKGROUND OF THE INVENTION

High precision accelerometers that use some form of magnetic rebalancing are typically bulky, expensive, and include a moving area that may not be completely sealed such that particulate contamination occurs when magnets are added to the accelerometer system. D'Arsonval MEMS accelerometers have been developed to address these deficiencies. Further, D'Arsonval MEMS devices performing other functions have been developed. However, there is an increasing need to improve the operating efficiency of the D'Arsonval MEMS devices.

### SUMMARY OF THE INVENTION

The present invention increases flux density in a D'Arsonval Micro-Electro-Mechanical Systems (MEMS) device. An exemplary embodiment of the increased flux density D'Arsonval Micro-Electro-Mechanical Systems (MEMS) device includes a housing, a proof mass suspended within the housing by at least one torsional flexure, a second torsional rebalancing magnet, and a current coil disposed on the proof mass. A portion of the current coil is disposed between the first torsional rebalancing magnet and the second torsional rebalancing magnet. A field generated in response to a current in the current coil interacts with a magnetic field generated by the first torsional rebalancing magnet and the second torsional rebalancing magnet. The magnetic field generates a rebalancing force that stabilizes a position of the proof mass.

In accordance with still further aspects of the invention, a method used by an exemplary embodiment senses movement of a proof mass. The proof mass has an axis of rotation about at least one flexure and at least one pair of rebalancing magnets. A portion of a current coil is positioned between the pair of rebalancing magnets. A magnetic field is generated by the pair of rebalancing magnets such that a magnetic flux field flows approximately orthogonally to the axis of rotation of the proof mass. The method includes injecting current through the current coil to generate flux that interacts with the magnetic flux field and generating a rebalancing force that is applied to the proof mass to stabilize a position of the proof mass.

### BRIEF DESCRIPTION OF THE DRAWINGS

Preferred and alternative embodiments of the present invention are described in detail below with reference to the following drawings:

FIGURE 1 is a block diagram of an increased flux density D'Arsonval MEMS device implemented in a Micro-Electro-Mechanical Systems (MEMS) system;

FIGURE 2 is a profile view of the increased flux density D'Arsonval MEMS device;

FIGURE 3 is a plan view of the increased flux density D'Arsonval MEMS device;

FIGURE 4 is a profile view of a set of torsional rebalancing magnets and the generated flux lines;

FIGURE 5 is a profile view of an alternative embodiment of the increased flux density D'Arsonval MEMS device; and

FIGURE 6 is a profile view of an embodiment of the increased flux density D'Arsonval MEMS device having a single set of torsional rebalancing magnets.

### DETAILED DESCRIPTION OF THE INVENTION

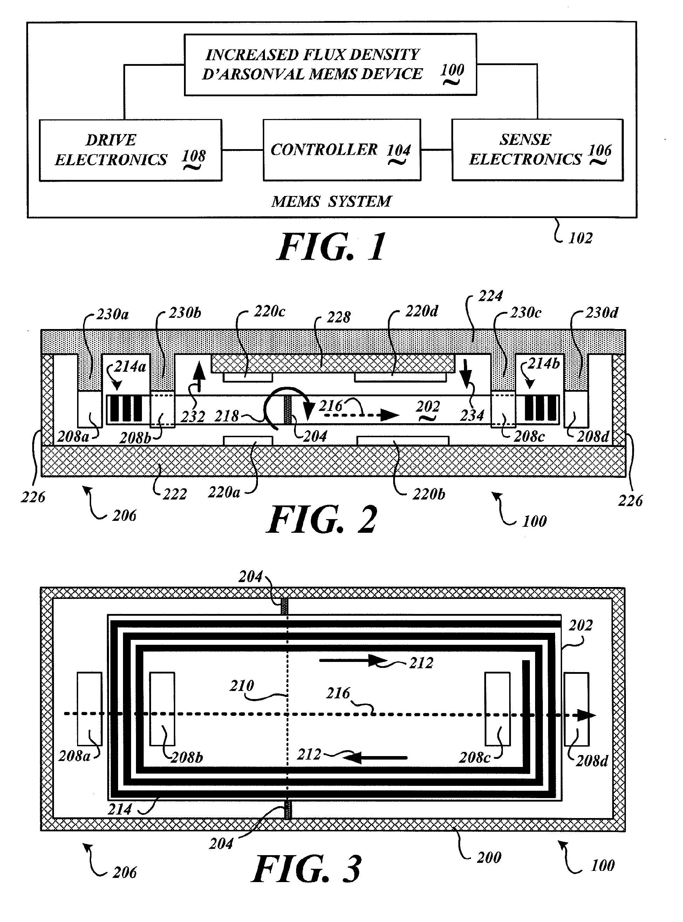

FIGURE 1 is a block diagram of an increased flux density D'Arsonval Micro-Electro-Mechanical Systems (MEMS) device 100 implemented in a MEMS system 102 formed in accordance with an embodiment of the invention. The MEMS system 102 further includes a controller 104. The controller 104 is in signal communication with a sense electronics component 106 and a drive electronics component 108. The sense electronics component 106 and the drive electronics component 108 are in signal communication with the increased flux density D'Arsonval MEMS device 100.

FIGURE 2 is a profile view of the increased flux density D'Arsonval MEMS device 100. FIGURE 3 is a plan view of the increased flux density D'Arsonval MEMS device 100.

The increased flux density D'Arsonval MEMS device 100 includes a proof mass 202 suspended by at least one torsional flexure 204 within a housing 206 and two sets of torsional rebalancing magnets 208a, 208b, 208c, 208d. The first torsional rebalancing magnet 208a and the second torsional rebalancing magnet 208b are located proximate to a first end of the proof mass 202. The third torsional rebalancing magnet 208c and the fourth torsional rebalancing magnet 208d are located proximate to an opposing second end of the proof mass 202.

The two sets of torsional rebalancing magnets 208a, 208b, 208c, 208d make use of a Lorentz force by passing a current 212 through a current coil 214 that lies on both sides of a rotational axis 210 of the proof mass 202. The current 212 injected through the current coil 214 generates a magnetic flux field 216 so that D'Arsonval type movement about the rotational axis 210 rebalances the proof mass 202. An optional magnetic shield (not shown) may be present around the increased flux density D'Arsonval MEMS device 100 and/or the MEMS system 102 in some embodiments for use in a multi-sensor environment. In some embodiments, the magnetic shield may be integrated into, or may be part of, the housing 206.

Any suitable MEMS device may be implemented as an increased flux density D'Arsonval MEMS device 100. In the exemplary embodiment of FIGURES 2 and 3, the torsional flexures 204 allow rotation (corresponding to the illustrated rotational arrow 218) of the proof mass 202 about the axis 210. Depending upon the embodiment, the increased flux density D'Arsonval MEMS device 100 may be configured to detect an acceleration of and/or a rotation of the increased flux density D'Arsonval MEMS device 100 based upon movement of the proof mass 202. It is appreciated that in some embodiments, the proof mass 202 may not actually move in response to an acceleration and/or a rotation, but rather, generate detectable forces.

A plurality of electrodes 220a, 220b, 220c, 220d sense movement (and/or forces) of the proof mass 202 in response to an acceleration and/or a rotation of the increased flux density D'Arsonval MEMS device 100. A change in position of the proof mass 202 with respect to the electrodes 220a, 220b, 220c, 220d causes a capacitance change between the proof mass 202 and the electrodes 220a, 220b, 220c, 220d. Changes in capacitance are interpreted by the controller 104 to determine the acceleration of and/or the rotation of the increased flux density D'Arsonval MEMS device 100.

The housing 206, in the exemplary embodiment of FIGURES 2 and 3, includes a bottom portion 222, a cover portion 224, and side portions 226. In an exemplary embodiment, the bottom portion 222 is Pyrex. The proof mass 202, and other components, are formed between the Pyrex bottom portion 222 and an upper Pyrex portion 228 using any suitable MEMs fabrication process or system.

The cover portion 224, in this exemplary embodiment, has a plurality of non-magnetic standoffs 230a, 230b, 230c, 230d. The two sets of torsional rebalancing magnets 208a, 208b, 208c, 208d are secured to the non-magnetic standoffs 230a, 230b, 230c, 230d, respectively, using any suitable securing means. The dimensions of the non-magnetic standoffs 230a, 230b, 230c, 230d are such that, after fabrication of the proof mass and other components, the cover portion 224 is secured into position in a manner that positions the two sets of torsional rebalancing magnets 208a, 208b, 208c, 208d in their designed locations.

The side portions 226 may facilitate precise positioning of the torsional rebalancing magnets 208a, 208b, 208c, 208d between the current coil 214. The side portions 226 may be part of or integrated into the cover portion 224, the bottom portion 222, or may be separate portions. The side portions 226, the bottom portion 222, and the cover portion 224 are secured together using any suitable securing means, thereby forming the housing 206. In an exemplary embodiment, anodic bonding is used to secure the side portions 226, the bottom portion 222, and/or the cover portion 224 with each other.

The housing 206 may be optionally sealed by design or the side portions 226, the bottom portion 222, and the cover portion 224. Further, other portions (not shown) may be used in the housing 206. For example, but not limited to, electrical leads, contacts or the like may be fabricated into the side portions 226, the bottom portion 222, and/or the cover portion 224 as needed to provide the communication of the various elements of the increased flux density D'Arsonval MEMS device 100 with the drive electronics 108, the sense electronics 106, the controller 104, and/or other devices (not shown).

The current coil 214 lies on top of or within the proof mass 202. Portions 214a, 214b of the planar current coil 214 are located between each set of torsional rebalancing magnets 208a, 208b and 208c, 208d. The current coil 214 may be a single layer spiral coil in an exemplary embodiment that is oriented along a plane of the proof mass 202. In one embodiment, the current coil 214 includes approximately 10 turns that are each approximately 45 micrometers (microns) wide, with a spacing of approximately 15 microns between turns and a thickness of approximately 0.5 millimeters. However, different numbers of turns, widths, spacing, and thicknesses for the coil 214 may also be used. Although only a single current coil 214 is shown for clarity, additional current coils (not shown) may also be used.

In the exemplary embodiment illustrated in FIGURES 2 and 3, a first portion of the current coil 214a is positioned between the set of torsional rebalancing magnets 208a, 208b. A second portion of the current coil 214b is positioned between the set of torsional rebalancing magnets 208c, 208d. A north-south axis of the sets of torsional rebalancing magnets 208a, 208b, and 208c, 208d, are oriented approximately orthogonal to the rotational axis of the proof mass 202. The flux interaction between the portion of the current coil 214a and the set of torsional rebalancing magnets 208a, 208b generates a rebalancing force 232. Similarly, the flux interaction between the portion of the current coil 214b and the set of torsional rebalancing magnets 208c, 208d generates a rebalancing force 234. The generated rebalancing forces 232, 234 stabilize position of the proof mass 202 when the increased flux density D'Arsonval MEMS device 100 is subjected to an acceleration and/or a rotation.

The current coil 214 is connected to the drive electronics component 108 (FIGURE 1) using suitable connectors. The current coil 214 may be formed using doped electrically conductive silicon. Alternatively, the current coil 214 may be formed of deposited metal. The controller 104 is configured to direct the drive electronics component 108 to send a current through the current coil 214 based on the at least one sense signal from the sense electrodes 220a, 220b, 220c, 220d. The controller 104 is further configured to provide an output signal, indicative of an acceleration applied to the proof mass 202 and based on the current 212 through the current coil 214.

Any suitable material may be used for the torsional rebalancing magnets 208a, 208b, 208c, 208d. Samarium cobalt provides a relatively high coercive force and a relatively high flux per magnet volume ratio. In an exemplary embodiment, a Samarium Cobalt (SmCo) magnet is used.

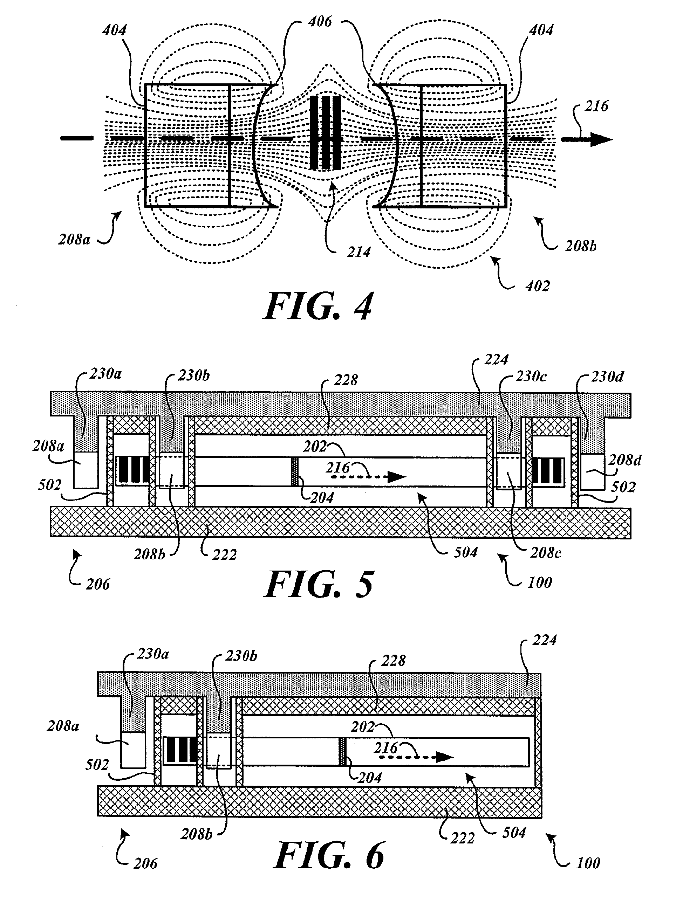

FIGURE 4 is a profile view of a set of torsional rebalancing magnets 208a, 208b (or alternatively, 208c, 208d) and the generated flux lines 402 resulting from the magnetic fields of the set of torsional rebalancing magnets 208a, 208b (or alternatively, 208c, 208d) and fields established by current passing through the current coil 214. The plurality of generated flux lines 402 corresponds to the above described and illustrated magnetic flux field 216.

Each of the set of the torsional rebalancing magnets 208a, 208b, 208c, 208d has a body portion 404 and a face portion 406. The external surface of the face portion 406 is configured to improve the uniformity of the generated flux. Here, the shape of the external surface of the face portion 406 is generally parabolic. Any suitable shape of the external surface of the face portion 406 may be selected to optimize the generated flux in any desired pattern.

In some embodiments, the body portion 404 and the face portion 406 are separate portions that have been joined. In other embodiments, the body portion 404 and the face portion 406 are formed as a single piece.

FIGURE 5 is a profile view of an alternative embodiment of the increased flux density D'Arsonval MEMS device 100. Here, side portions 502 are formed and/or bonded to the Pyrex bottom portion 222 and the upper Pyrex portion 228 so as to enclose the proof mass 202 (and other components). Thus, the MEMs device components are protectively sealed in a region 504. In this exemplary embodiment, the cover portion 224 (with non-magnetic standoffs 230a, 230b, 230c, 230d and the rebalancing magnets 208a, 208b, 208c, 208d secured thereto) may be conveniently added after the MEMs device components are protectively sealed in the region 504. The protectively sealed MEMs device components may be diced from a larger die, and then coupled to the cover portion 224. Or, groups of protectively sealed MEMs device components may be coupled with corresponding groups of the cover portion 224, and then later separated.

FIGURE 6 is a profile view of another alternative embodiment of the increased flux density D'Arsonval MEMS device 100. Here, only a single set of torsional rebalancing magnets 208a, 208b are used to establish the flux 216. This embodiment is configured generally in accordance with the embodiment illustrated in FIGURE 5. Alternatively, embodiments with the single set of torsional rebalancing magnets 208a, 208b may be configured generally in accordance with the embodiment illustrated in FIGURES 2-3. In some embodiments, more than two sets of torsional rebalancing magnets may be used. In such embodiments, the current coil may be in a different position (than as illustrated in FIGURE 3, for example).

Generally, embodiments of the increased flux density D'Arsonval MEMS device 100 are formed by starting with a silicon wafer that is patterned and etched to produce several pendulous proof masses 202 with the torsional flexures 204 attached to support the proof masses 202. The silicon wafer is then oxidized to produce a dielectric layer to support metallization. Further patterning and metallization steps create the electrodes 220a, 220b, 220c, 220d and the basic element for the spiral current coil 214.

In an exemplary embodiment, the inner trace of the current coil 214 is brought out via the placement of a dielectric layer across the current coil 214. The current coil 214 is formed using a suitable metallization step. Glass wafers with the same diameter as the silicon wafer are patterned, etched, and metalized to produce recesses in the surface that act as second plates of the differential capacitive pickoffs and further serve to control device damping. A first glass wafer is then aligned with the silicon wafer and anodically bonded to form the lower capacitor plates. This assembly is then anodically bonded to a second glass wafer to form the upper capacitors for the differential capacitive pickoff. The two sets of torsional rebalancing magnets 208a, 208b, 208c, 208d are attached to the respective non-magnetic standoffs 230a, 230b, 230c, 230d. The wafer assembly is then diced so that individual accelerometers can be accessed for packaging, testing, and incorporation into an accelerometer system. Magnetic fields established by the sets of torsional rebalancing magnets 208a, 208b, 208c, 208d interact with the field created when the current is injected into the current coil 214.

## Claims

1. An increased flux density D'Arsonval Micro-Electro-Mechanical Systems (MEMS) device comprising:
a housing (206);
a proof mass (202) suspended within the housing (206) by at least one torsional flexure (204);
a first torsional rebalancing magnet (208a);
a second torsional rebalancing magnet (208b); and
a current coil (214) disposed on the proof mass (202), wherein a portion of the current coil (214) is disposed between the first torsional rebalancing magnet (208a) and the second torsional rebalancing magnet (208b), and wherein a field generated in response to a current in the current coil (214) interacts with a magnetic field generated by the first torsional rebalancing magnet (208a) and the second torsional rebalancing magnet (208b), and
wherein the magnetic field generates a rebalancing force that stabilizes a position of the proof mass (202).

2. The increased flux density D'Arsonval MEMS device of Claim 1,
wherein the first torsional rebalancing magnet (208a) and the second torsional rebalancing magnet (208b) each comprise:
a body portion (404); and
a face portion (406), wherein the face portion (406) of the first torsional rebalancing magnet (208a) faces the face portion (406) of the second torsional rebalancing magnet (208b), and wherein the face portion (406) has an external surface operable to form a substantially uniform magnetic field generated by the first torsional rebalancing magnet (208a) and the second torsional rebalancing magnet (208b).

3. The increased flux density D'Arsonval MEMS device of Claim 1, further comprising:
a third torsional rebalancing magnet (208c); and
a fourth torsional rebalancing magnet (208d),
wherein a second portion of the current coil (214) is disposed between the third torsional rebalancing magnet (208c) and the fourth torsional rebalancing magnet (208d), and wherein a field generated in response to current in the current coil (214) interacts with a second magnetic field generated by the third torsional rebalancing magnet (208c) and the fourth torsional rebalancing magnet (208d) to generate a second rebalancing force that stabilizes the position of the proof mass (202),
wherein the first torsional rebalancing magnet (208a) and the second torsional rebalancing magnet (208b) are located proximate to a first end of the proof mass (202), and
wherein the third torsional rebalancing magnet (208c) and the fourth torsional rebalancing magnet (208d) are located proximate to an opposing second end of the proof mass (202).

4. The increased flux density D'Arsonval MEMS device of Claim 1,
wherein a north-south axis of the first torsional rebalancing magnet (208a) and a north-south axis of the second torsional rebalancing magnet (208b) are oriented approximately orthogonal to a rotational axis of the proof mass (202).

5. The increased flux density D'Arsonval MEMS device of Claim 1,
wherein the first torsional rebalancing magnet (208a) and the second torsional rebalancing magnet (208b) is a Samarium Cobalt (SmCo) magnet.

6. The increased flux density D'Arsonval MEMS device of Claim 1, further comprising:
a cover portion (224) with a first non-magnetic standoff (230a) and a second non-magnetic standoff (230b),
wherein the first torsional rebalancing magnet (208a) is secured to the first non-magnetic standoff (230a),
wherein the second torsional rebalancing magnet (208b) is secured to the second non-magnetic standoff (230b),
wherein the first and second non-magnetic standoffs (230a, 230b) hold the first and second torsional rebalancing magnets (208a, 208b), respectively, in a position such that the portion of the current coil (214) is disposed between the first torsional rebalancing magnet (208a) and the second torsional rebalancing magnet (208b).

7. The increased flux density D'Arsonval MEMS device of Claim 1, further comprising:
a pair of sense electrodes (202a, 202c) located on an interior portion of the housing (206) with the proof mass (202) disposed therebetween;
a sense electronics component (106) in signal communication with the pair of sense electrodes (202a, 202c), the sense electronics component (106) configured to generate at least one sense signal based on at least one capacitance value between one of the pair of sense electrodes (202a, 202c) and the proof mass (202);
a drive electronics component (108) in signal communication with the current coil (214); and
a controller (104) in signal communication with the sense electronics component (106) and the drive electronics component (108),
wherein the controller (104) is configured to direct the drive electronics component (108) to send a current through the current coil (214) based on the at least one sense signal and wherein the controller (104) is further configured to provide an output signal indicative of a movement of the proof mass (202), the output signal based on the current through the current coil (214) and the at least one sense signal.

8. A method of sensing acceleration with an increased flux density D'Arsonval MEMS device that includes a proof mass (202) having an axis of rotation about at least one flexure and at least one pair of rebalancing magnets (208a, 208b), wherein a portion of a current coil (214) is positioned between the pair of rebalancing magnets, and wherein a magnetic field is generated by the pair of rebalancing magnets (208a, 208b) such that a magnetic flux field flows approximately orthogonally to the axis of rotation of the proof mass (202), the method comprising:
injecting a current through the current coil (214) to generate flux that interacts with the magnetic flux field; and
generating a rebalancing force that is applied to the proof mass (202) to stabilize a position of the proof mass (202);
sensing a change in a capacitance between at least one sense electrode (220a) and the proof mass (202);
modifying the current in the current coil (214) to generate flux that interacts with the magnetic flux field; and
rebalancing the position of the proof mass (202) in response to the modified current in the current coil.

9. The method of Claim 8, further comprising:
determining at least one of an acceleration or a rotation of the increased flux density D'Arsonval MEMS device based upon the sensed change in capacitance and the modified current.

10. The method of Claim 8, wherein the pair of rebalancing magnets (208a, 208b) with a portion of a current coil (214) therebetween is a first pair of rebalancing magnets (208a, 208b) with a first portion of the current coil (214),
wherein the generated magnetic field is a first magnetic field, wherein the increased flux density D'Arsonval MEMS device further includes a second pair of rebalancing magnets (208c, 208d) with a second portion of the current coil (214) positioned therebetween, and wherein a second magnetic field is generated by the second pair of rebalancing magnets (208c, 208d) such that the magnetic flux field flows approximately orthogonally to the axis of rotation of the proof mass (202), and comprising:
injecting current through the current coil (214) to generate flux that interacts with the first magnetic flux field and the second magnetic flux field;
generating a first rebalancing force in proximity to the first pair of rebalancing magnets (208a, 208b), wherein the first rebalancing force is applied to the proof mass (202) to stabilize the position of the proof mass (202); and
generating a second rebalancing force in proximity to the second pair of rebalancing magnets (208c, 208d), wherein the second rebalancing force is applied to the proof mass (202) to further stabilize the position of the proof mass (202).
